(19) Europäisches Patentamt / European Patent Office / Office européen des brevets

(11) **EP 3 349 086 A1**

(12) **EUROPEAN PATENT APPLICATION**

(43) Date of publication:
18.07.2018 Bulletin 2018/29

(51) Int Cl.:
*G05D 1/00* (2006.01)   *G05D 1/10* (2006.01)

(21) Application number: 17305051.9

(22) Date of filing: 17.01.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: **Thomson Licensing**
92130 Issy-les-Moulineaux (FR)

(72) Inventors:
• **GALVANE, Quentin**
  **35576 CESSON SEVIGNE CEDEX (FR)**

• **SERVANT, Fabien**
  **35576 CESSON SEVIGNE CEDEX (FR)**
• **FLEUREAU, Julien**
  **35576 CESSON SEVIGNE CEDEX (FR)**
• **CHRISTIE, Marc**
  **35065 RENNES Cedex (FR)**
• **GUILLOTEL, Philippe**
  **35576 CESSON SEVIGNE CEDEX (FR)**
• **TARIOLLE, Francois-Louis**
  **35576 CESSON SEVIGNE CEDEX (FR)**

(74) Representative: **Merlet, Hugues**
**TECHNICOLOR**
**1-5, rue Jeanne d'Arc**
**92130 Issy-les-Moulineaux (FR)**

(54) **METHOD AND DEVICE FOR DETERMINING A TRAJECTORY WITHIN A 3D SCENE FOR A CAMERA**

(57)   A method and device for determining a trajectory of a first camera in a three-dimensional scene, said 3D scene comprising at least one object of interest, a pose information being associated with said at least one object of interest, the method comprising determining a set of points of said 3D scene, said set of points representing of a collision-free space of said 3D scene; and determining said trajectory in said 3D scene, said trajectory having a starting point and an ending point, said trajectory being defined with a plurality of points selected within said set, said plurality of points being selected according to a difference of said pose information defined in an image space between pairs of selected points from said starting point to said ending point, said image space being associated with an image of at least a part of said scene acquired with said first camera.

Fig 1

EP 3 349 086 A1

**Description**

**1. Technical field**

The present disclosure relates to the domain of generating the path within a three-dimensional (3D) scene to be followed by one or more acquisition devices acquiring image(s) of the 3D scene. The present disclosure is also understood in the context of computing the trajectory of a drone within a real 3D scene.

**2. Background art**

This section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

With the advent of cheap, stable and powerful quadrotors, coupled with high quality camera lenses mounted on controllable gimbals, quadrotors are becoming a new cinematographic device in the panel of techniques to create shot sequences for both professional and amateurs. However, mastering the control of such devices to create desired trajectories and shoot sequences in possibly evolving environments requires a significant amount of time and practice. The synchronization of the motion of the quadrotor with the motion of the gimbal holding the camera, while ensuring that the drone is in a safe position (i.e. without potential collisions) remains the key challenge. Currently, professional film crews rely on two operators who coordinate their actions: a pilot controlling the drone motion and a cinematographer controlling the camera orientation. This obviously calls for novel techniques capable of automating some tasks, while leaving the user with a sufficient degree of artistic control.

On the one hand, consumer drone quadrotors have been proposing "follow-me" features in which the quadrotor automatically follows and frames a moving target. This relies on using either a GPS device on the target to follow or vision-based target tracking algorithms to always maintain the target in frame, and includes sensor-based collision avoidance strategies. This however leaves no degree of control over the trajectory generated by the drone. Recently, different approaches have proposed means to design virtual trajectories in 3D environments, before flying a drone along these trajectories in the real world. Trajectories are generated to ensure their feasibility in the real world, i.e. the capacity of the drone to physically follow the trajectory. While such approaches lead to useful prototyping tools, they suffer from multiple drawbacks. First, they do not consider moving targets, and are therefore limited to static guided tours. Second, collision constraints are not considered, and avoidance trajectories must be designed manually. Finally, such approaches are no more than viewpoint interpolation tools, with specific constraints on the trajectory. They further do not enable any user interaction during the flight.

On the other hand, many automated virtual cinematography techniques have been proposed in the computer graphics literature. These techniques can enforce visual properties related to the framing, distance or orientation of the camera with regard to targets, or properties on camera paths. Automated viewpoint computation tools can now consider such cinematographic properties, solve them in real-time, perform transitions between viewpoints by interpolating cinematographic properties and automatically edit sequences from multiple viewpoints. These approaches are however not designed in ways that they can be directly adapted to the control of drones.

**3. Summary**

References in the specification to "one embodiment", "an embodiment", "an example embodiment", "a particular embodiment" indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure relates to a method of determining a trajectory of a first camera in a three-dimensional scene, the 3D scene comprising at least one object of interest, a pose information being associated with the at least one object of interest, the method comprising:

- determining a set of points of the 3D scene, the set of points representing of a collision-free space of the 3D scene;
- determining the trajectory in the 3D scene, the trajectory having a starting point and an ending point, the trajectory being defined with a plurality of points selected within the set, the plurality of points being selected according to a difference of the pose information defined in an image space between pairs of selected points from the starting point to the ending point, the image space being associated with an image of at least a part of the scene acquired with the first camera.

The present disclosure also relates to a device configured to determine a trajectory of a first camera in a three-dimensional scene, the 3D scene comprising at least one object of interest, a pose information being associated with the at least one object of interest, the device comprising a memory associated with a processor configured to:

- determine a set of points of the 3D scene, the set of points representing of a collision-free space of the 3D scene;
- determine the trajectory in the 3D scene, the trajectory having a starting point and an ending point, the trajectory being defined with a plurality of points selected within the set, the plurality of points being selected according to a difference of the pose information defined in an image space between pairs of selected points from the starting point to the ending point, the image space being associated with an image of at least a part of the scene acquired with the first camera.

The present disclosure also relates to a device configured to determine a trajectory of a first camera in a three-dimensional scene, the 3D scene comprising at least one object of interest, a pose information being associated with the at least one object of interest, the device comprising:

- means for determining a set of points of the 3D scene, the set of points representing of a collision-free space of the 3D scene;
- means for determining the trajectory in the 3D scene, the trajectory having a starting point and an ending point, the trajectory being defined with a plurality of points selected within the set, the plurality of points being selected according to a difference of the pose information defined in an image space between pairs of selected points from the starting point to the ending point, the image space being associated with an image of at least a part of the scene acquired with the first camera.

According to a particular characteristic, the the trajectory is determined by applying a cost function minimizing the difference to an A* algorithm.

According to a specific characteristic, plurality of points is further selected according to a visibility criteria associated with the points of the set, the visibility criteria being representative of a visibility level of the at least one object of interest from the points.

According to a particular characteristic, trajectory is further determined to minimize changes of curvature when passing from a point to another point in the selected plurality of points.

According to another characteristic, points are removed from the set of points that belong to a field of view of a second camera located in the 3D scene

According to a particular characteristic, an approximate trajectory, is generated, the trajectory being further determined according to the approximate trajectory

The present disclosure also relates to a computer program product comprising program code instructions to execute the steps of the abovementioned method, when this program is executed on a computer.

The present disclosure also relates to a (non-transitory) processor readable medium having stored therein instructions for causing a processor to perform at least the abovementioned method.

### 4. List of figures

The present principles will be better understood, and other specific features and advantages will emerge upon reading the following description, the description making reference to the annexed drawings wherein:

- figure 1 shows a trajectory of a camera within a 3D scene, in accordance with an example of the present principles;
- figure 2 shows an approximate trajectory of the camera of figure 1, in accordance with an example of the present principles;
- figure 3 shows a surface associated with a part of the 3D scene of figure 1 onto which the camera may move, in accordance with an example of the present principles;
- figure 4 shows the surface of figure 3 according to a determined point of view, in accordance with an example of the present principles;
- figure 5 shows a drone embedding the camera of figure 1, in accordance with an example of the present principles;
- figure 6 shows the structure of an apparatus adapted to determine the trajectory of the camera of figure 1, in accordance with an example of the present principles;
- figure 9 shows a method of determining the trajectory of the camera of figure 1, in accordance with a particular embodiment of the present principles.

## 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

The present principles will be described in reference to a particular embodiment of a method of determining the trajectory of a camera in a three-dimensional (3D) scene. The 3D scene may be a real scene, a virtual scene or a scene mixing real and virtual objects (i.e. an augmented-reality (AR) scene). The 3D scene comprising one or more objects of interest, i.e. objects that maybe considered as targets for the camera when acquiring images of the 3D scene. The camera may be a real acquisition device or a virtual camera. A pose information is associated with any of the objects of interest, the pose information comprising information on the location of the associated object of interest within the scene and orientation information. The pose information may vary over the time, e.g. when the object of interest moves within the 3D scene. The 3D scene is modelled with a set of points that defines the space of the 3D scene into which the camera may move without hitting any object, such space being called the collision-free space of the 3D scene. The trajectory to be followed by the camera is determined by selecting a plurality of points of the collision-free space. Considering a starting point and an ending point for the trajectory, the selection of the points of the collision-free space defining the trajectory is based on the difference, for pairs of points of the collision-free space, between the pose information of the object of interest associated with a first point of the pair and the pose information of the object of interest associated with a second point of the pair, the pose information being expressed in the image space, i.e. in the space of the image that would be acquired by the camera if located at the considered point of the collision-free space.

Determining the trajectory by using the difference of pose information between points of the collision-free space defined in image space enables to optimize the trajectory and to obtain a cinematographic trajectory, i.e. a trajectory considering the pose of the object of interest.

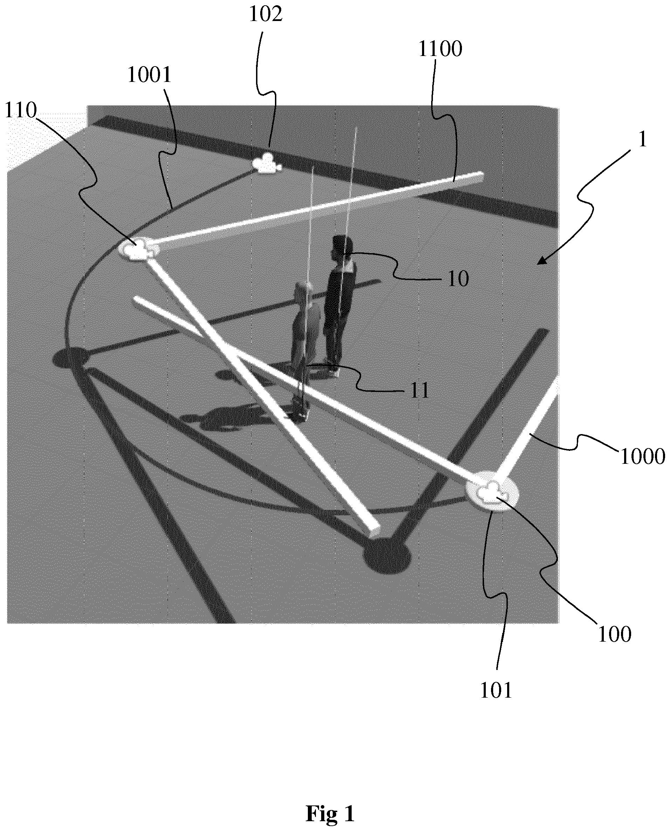

**Figures 1** shows the trajectory 1001 followed by an acquisition device such as a camera 100 moving with a 3D scene 1, according to a specific embodiment of the present principles. The 3D scene 1 is for example a real scene, images of which being acquired with the camera 100, the camera being a real acquisition device according to this non-limiting example. The field of view 1000 of the camera 100 is illustrated with white thick lines, the field of view varying according to the change of location of the camera 100 in the 3D scene 1 along the trajectory 1001. The 3D scene comprises one or more objects that may comprise persons 10, 11 as in the example of figure 1. One or more objects of the 3D scene 1 may be defined as objects of interest (also called targets), this/these object(s) of interest being the object a movie director or a user may want to follow when acquiring images of the 3D scene with the camera 100. One or more cameras 110 different from the camera may also be located in the 3D scene to acquire the 3D scene and/or the objects of interest 10, 11 according to points of view different from the acquisition points of view of the camera 100. The field of view 1100 associated with the camera 110 is also illustrated with white thick lines. A starting point 101 and an ending point 102 are associated with the trajectory 1001.

According to a variant, the 3D scene 1 is a virtual scene obtained with CGI (Computer-generated imagery), the cameras 100 and 110 being virtual cameras. According to another variant, the 3D scene 1 is a scene mixing real and virtual objects, i.e. an Augmented-Reality (AR) scene. The cameras 100, 110 may be real and/or virtual cameras, e.g. a virtual camera may be associated with a real camera, i.e. the points of views of the virtual and associated real camera are the same even when one of the real and virtual camera moves within the 3D scene 1.

The rest of the description will be focused on the non-limiting example of a real scene acquired with a real camera 100 mounted on a drone (also known as Unmanned Aerial Vehicle), the drone being also called quadrotors in the following description. It is understood that the present principles are not limited to this non-limited exampled and apply to virtual scene and/or AR scene.

A specific preoccupation when controlling quadrotor drones around characters 10, 11 is safety. A parameterization of a specific camera parametric space defined in computer animation, the Toric Space (described in "Intuitive and Efficient Camera Control with the Toric Space" by Lino C. and Christie M., in ACM Transactions on Graphics, 2015), needs to be updated into a Safe Toric Space in which a given security distance to characters 10, 11 is guaranteed (camera positions within a distance closer than the security distance cannot be expressed in this new parameterization). A real-time path planning technique may be further proposed, which computes $C^4$ continuous camera trajectories for the drones to ensure their feasibility, while satisfying cinematographic properties. According to an optional variant, a user may interactively control the drone using Through-the-lens manipulations in the Safe Toric Space. According to another optional variant, the motions of multiple drones may be coordinated to cover complementary cinematographic viewpoints of the 3D scene 1.

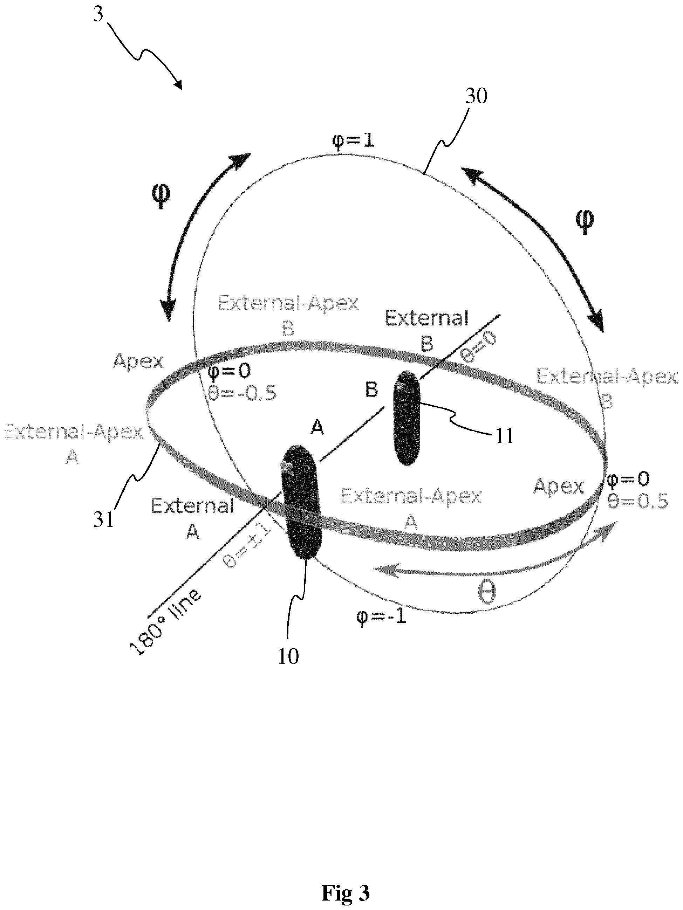

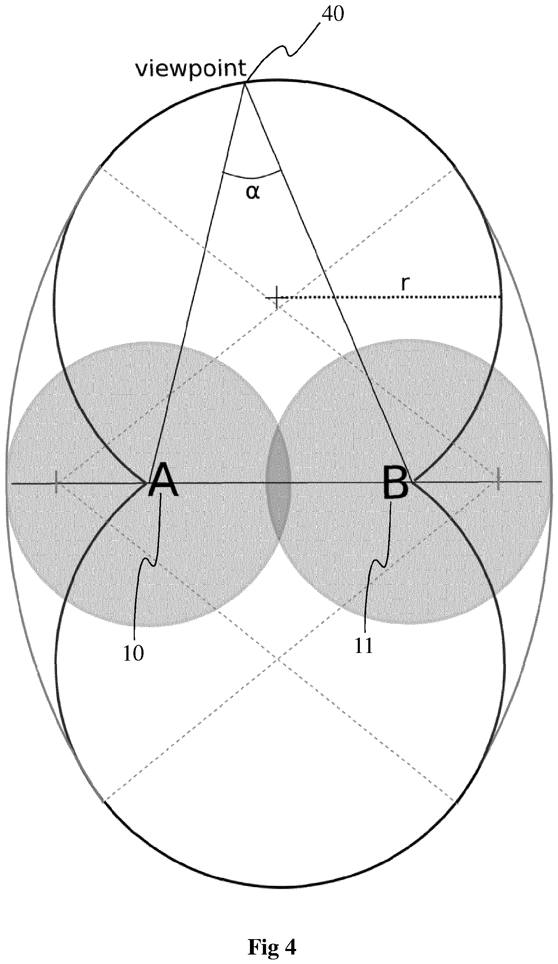

**Figures 3 and 4** show representation of the abovementioned Safe Toric Space, according to a non-limiting embodiment of the present principles.

The safe toric surface according to the present principles is a generalized toric surface, where regions behind targets A 10 and B 11 are replaced by spheres tangent to the original toric surface and the safety spheres. This allows framing two targets 10, 11 with a given angle $\alpha$, to guarantee a safety distance illustrated with the circles around A 10 and B 11 in shades of grey between the camera 40 and targets 10, 11, and to ensure a $C^1$ continuity of the surface.

Camera regions are designed around the two targets A 10 and B 11 by using an horizontal angle $\theta$ 31 and a vertical angle $\varphi$ 30. Common horizontal view angles used in films are also cast into 3 regions (external, external-apex, apex) modeled as intervals on parameter $\theta$ 31.

The Toric Space (Lino et al. 2015) intuitive camera representation defines as a set of toric-shaped surfaces around two targets which enable efficiently placing virtual cameras while exactly positioning targets on the screen. Lino et al. also proposed an algorithm to interpolate between camera viewpoints while preserving the cinematic features of the input viewpoints. However, as is, this representation does not guarantee that a security distance to the targets can be enforced in any case, which is desired behavior when flying a drone in a real scene, nor considers collisions with the scene or occlusions of the targets, which are desired behaviors in real scenes. Moreover toric manifold surfaces are only $C^0$. Cameras are then allowed to make sharp turns when moving onto such a surface, which are not always feasible by drones.

To allow moving drones around two targets, while evolving in a physically bounded scene containing static and dynamic obstacles, to ensure a security distance $d^S$ can be enforced between a drone and targets 10, 11, we rely on a re-parametrized Toric manifold surface.

For two targets A 10 and B 11, a requirement is that the camera 100 should not collide with targets 10, 11, and a desired feature is to enforce a $C^1$ continuity of paths planned on the surface. To do so, we locally replace the surface of the original Toric surface positioned behind a target 10, 11 T by a new surface $E_T^S$ tangent to both the Toric surface and a security sphere around the target 10, 11 (of radius $d^S$). Practically, $E_A^S$ (behind target A) is computed as follows. We first rely on the same notations and computations as in Lino et al., where $\alpha$ is a desired angle between the camera and the two targets 10, 11 -- corresponding to positioning these targets at two desired positions on the screen -- and r is the radius of the Toric surface obtained from this angle $\alpha$. Second, we assume a 1-parametric line (of parameter x) with origin A and oriented towards vector AB, and distinguish three types of possible surfaces:

Type 1: $d^S < r - \dfrac{AB}{2}$ ; $E_A^S$ belongs to the sphere centered at a point $C_A$ of abscissa $x = -\dfrac{r^2 - \delta^2}{2(\delta - r \sin \alpha)}$ (where $\delta = r - d^S$), and with radius x- $d^S$.

Type 2: $d^S > r - \dfrac{AB}{2}$ ; $E_A^S$ belongs to the sphere centered at a point $C_A$ of abscissa $x = \dfrac{AB}{2} + \dfrac{r^2 - \delta^2}{2(\delta - r \sin \alpha)}$ (where $\delta = d^S + AB - r$), and with radius x+ $d^s$.

Type 3: $d^S = r - \dfrac{AB}{2}$ ; $E_A^S$ belongs to the plane tangent to the line (AB) and passing through a point $C_A$ of abscissa -$d^S$; the surface of type 3 may be seen as either type 1 or type 2 surface where |x| tends toward $\infty$.

Note that surfaces of type 2 and 3 are convex, while those of type 1 are not.

We finally parametrize the safe toric manifold surface according to the present embodiment through a pair of ratios $(\varphi, \theta) \in [-1; +1]^2$ representing the horizontal and vertical angles around targets 10, 11. We designed these ratios in a meaningful way: practically $\theta = 0$ and $\theta = \pm 1$ respectively provide a view from behind B and a view from behind A. Furthermore, $\varphi = 0$, $\varphi = +1$ and $\varphi = -1$ respectively provide a view from the targets' height, from above and from below targets. Given interval of ratios represent characteristic viewpoints such as apex, external or external apex shots.

Note that, in the case of filming a single target, a safe manifold surface may also be built as a sphere around the target, whose radius is never smaller than the security distance. Accordingly, we parametrize this sphere through the same pair of ratios $(\varphi, \theta)$, where $\theta = 0$ and $\theta = \pm 1$ respectively provide a view from the front and from behind the target. For the sake of simplicity, in this case we use the symbol $\alpha$ to refer to the sphere radius.

In the remaining, we will refer to such re-parametrized surfaces as a Safe Toric Surface or STS; and we will refer to the continuous set of STS defined around one or more targets as a Safe Toric Space parametrized through a triplet $(\alpha, \varphi, \theta)$.

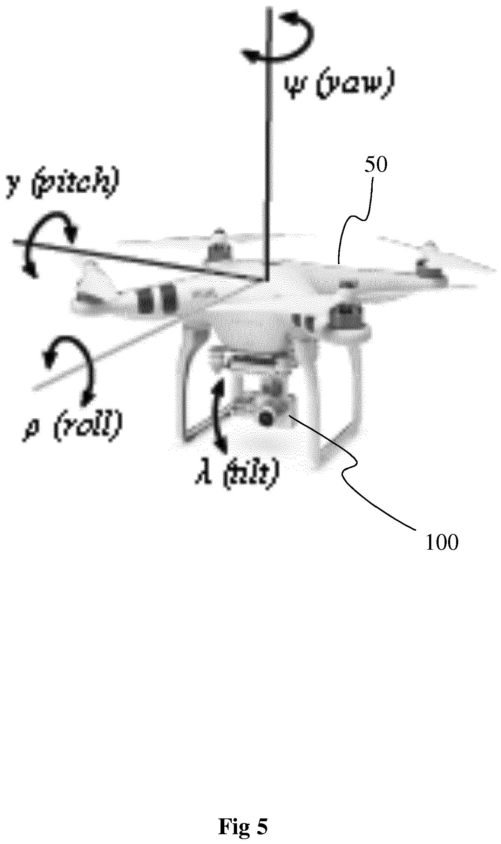

**Figure 5** shows a drone 50 embedding the camera 100, in accordance with a non-limiting embodiment of the present principles.

We denote a drone configuration for which the filming camera 100 is considered as the end-effector, as a 7d vector q(x,y,z,ρ,γ,ψ,λ). The drone position is determined by a 3d vector ω(x,y,z) in Cartesian space and the drone orientation is determined by a 4d vector of Euler angles (ρ,γ,ψ,λ) respectively representing the roll, pitch, yaw and tilt of the drone. We also denote the drone position in our Safe Toric Space as a 3d vector τ(α,φ,θ), which can then be used to compute its equivalent ω in world space.

It is important to note that the end-effector (i.e. the camera 100) orientation of the drone is limited to horizontal and vertical rotations, which prevents from rolling the camera around its forward axis (denoted as y). Indeed, in the drone's configuration, the roll angle p is used to move left or right and even when a gimbal is used to hold the camera, it commonly offers a single degree of freedom λ to tilt the camera 100 (i.e. to look up or down).

A requirement that arises is then to ensure the feasibility by a quadrotor drone to be at a given viewpoint (i.e. being able to implement the viewpoint while staying in a stationary state). We here propose an iterative algorithm that, given a drone position and a desired composition for one or two targets, can rapidly compute such a feasible camera orientation (i.e. with no roll).

We first consider this orientation is a east-north-up (ENU) frame, centered at the camera position, and model it as a triplet of vectors x (east), y (north) and z (up). Note that one feature of a no-roll camera orientation is that east is aligned with horizon (i.e. x is orthogonal to the world up vector, which we refer to as Z). We then build upon this feature to compute a no-roll camera orientation for which the on-screen positioning error of an arbitrary number of targets is minimized. As such, our algorithm can be viewed a generalized look-at operator.

We denote the world position of target i as $P_i$ and its desired screen position as $p_i$. In a first step, we compute vector y as the average of all single look-at vectors $y_i$ required to position target i at the center of the screen. We then compute vectors x and z accordingly to obtain an initial feasible orientation (i.e. x = y * Z and z = x * y). In a second step, we define the two angular errors in the computed orientation as δψ (yaw angle error) and δλ (tilt angle error), and we correct both angles through the following process.

To do so, we rely on the desired world-space vector $v_i^d$, corresponding to the half-line from the camera position that contains all points projecting at $p_i$ onto the camera plane. We then rely on the actual world-space vector $v_i^a$ from the camera to target i. We finally define the projection operator $\Pi_n(v)$ that projects a vector v in the plane of normal n.

Both the yaw and the tilt errors are corrected in a 2-step process. We compute Δψ as the average of all directed angles between projections $\Pi_z(v_i^d)$ and $\Pi_z(v_i^a)$. We then apply the rotation $q_\psi$ of angle δψ around axis x to the camera. In a way similar, we compute Δλ as the average of the directed angle between $\Pi_x(v_i^d)$ and $\Pi_x(v_i^a)$. And we apply the rotation $q_\lambda$ of angle δλ around axis x to the camera.

After each separate correction, we also recompute the triplet of vectors (x,y,z), as well as all vectors $v_i^d$ to match the new camera orientation. Both corrections preserve the alignment of east with the horizon. The final drone orientation is computed by iterating on both corrections until the sum of Δψ and Δλ are lower than a defined value ε (e.g. 0.001 or 0.01).

It should be noted that this computation method generalizes to the case where when no gimbal is used (i.e. the camera is directly attached to the drone), subject to two adaptations: (i) the initial look-at vector y is projected onto the east-north plane (so as λ=0), and (ii) the orientation correction is limited to a single iteration to correct the yaw angle.

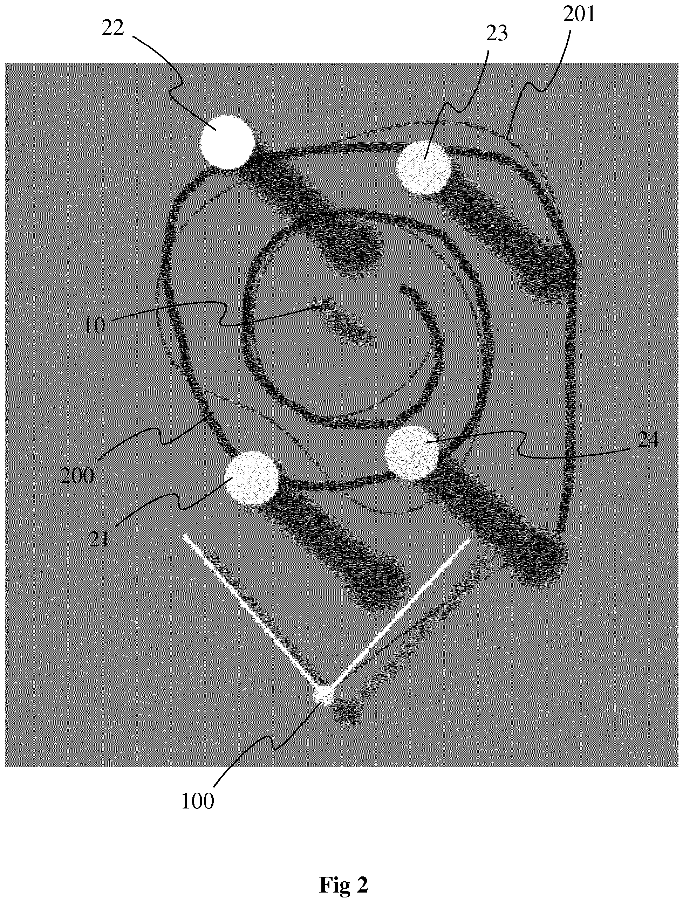

**Figures 1 and 2** further show the generation of real-time cinematographically plausible trajectories, handles obstacles 21 to 24 and adapts to people 10, 11 movements in the 3D scene 1, while remaining interactive and physically feasible, according to a specific embodiment of the present principles.

A key challenge in filming scenes with drones is to assist a user in performing cinematographic and collision-free paths. We propose two novel path planning solutions that both rely on a visibility-aware roadmap similar to "Visibility transition planning for dynamic camera control" by Oskam et al. in Proceedings of 2009 ACM SIGGRAPH. Here, we do not focus on the construction of the roadmap but rather on the path planning tasks within this roadmap.

The design of all 3D trajectories and their execution in themselves have been devised following guidelines extracted from discussions with drone pilots. In a first step, the user can manually design her cinematographic goals, in the form of drone key-configurations, by using an interactive interface. This design is performed on a 3D reproduction of the real scene. In a second step, our system computes a collision-free path that corresponds to the user-designed cinematographic goals. The user is finally enabled to interactively fly the drone along the trajectory. She can finely control the velocity at which to fly the drone and the re-framing of the target(s). The user is allowed to rehearse the drone flight in 3D before flying the drone in the real scene. This process has two main advantages: (i) the user can adjust the execution of the trajectory to the live evolution of the scene (i.e. targets' performance) and (ii) the user is relieved from the hard task of manually controlling the drone position and orientation to avoid obstacles while also maintaining a given framing on targets at the same time (this generally requires two separate operators, one for controlling the position and one for the orientation).

It is firstly proposed a method to compute a path, between two drone configurations, following cinematographic practices. It relies on a distance metric aggregating both on-screen and in-world properties to optimize along a path. It has the advantage that the control of the drone/camera 100 is not only performed in the space of drone parameters, but also in the resulting image space.

It is also proposes a smart algorithm to plan a collision-free path from a user sketch, i.e. an approximate trajectory 200 in black thick line defined for example by a user via a user interface, but also handles moving obstacles.

It is further proposed a method to smooth a precomputed path and output a $C^4$-continuous drone trajectory according to an optional variant of the present principles. We cast this problem into an optimization process that integrates guidelines in making the trajectory both cinematographic (i.e. with a more uniform curvature) and feasible by a quadrotor drone, while preserving the obstacle avoidance constraints.

Planning a path from screen compositions

Many solutions have been proposed to plan paths inside a precomputed roadmap, (such as in \cite{oskam2009visibility}). The process according to the proposed solutions relies on a search performed by using a cost function which is limited to a tradeoff between two criteria defined in the world space: the path (also called trajectory) length (i.e. how linear is the path) and the visibility of targets 10, 11 along this path. While perfectly suited for some scenarios (e.g. video games), this approach is not suitable to fulfill cinematographic goals. In particular, it does not integrate criteria related to the screen composition of targets, in contrast to the present principles.

It is believed that an appropriate camera path is not necessarily the shortest in the world space, but instead the shortest in the screen space (i.e. minimizing the variations in the screen composition over time) and the one for which the drone height changes as little as possible (making the drone trajectory as natural as possible).

Note that, given a drone position (either vector $\omega$ or vector $\tau$), it is possible to compute the corresponding desired drone orientation by relying on the algorithm described in the part corresponding to figure 5. The assumption is made that a desired drone configuration can be encoded through its position alone. Following this assumption, we present a novel search space, which we refer to as the $(\omega,\tau)$-space. It aggregates the camera position both in the world space and in the safe toric space as a 6d vector $(x,y,z,\alpha,\varphi,\theta)$. Though both positions could appear as redundant, they in fact do not encode the same type of information (world-space properties of the camera vs screen-space properties of targets).

This problem is casted as the search of a path in the roadmap, for which the path length is defined in a space aggregating drone properties both in the world space and in the safe toric space (encoding screen-space properties). A configuration in this space (which we refer to as the $\tau$-space) is represented as a 4d vector $(\alpha,\varphi,\theta,z)$. The cost of an arc of the roadmap is then evaluated in terms of the traveled distance in this $\tau$-space but also in terms of the visibility of targets along the arc.

We here assume the system is provided with two drone configurations, one at the starting point of the path/trajectory $q_s$ (shot start) and one at the ending point of the path/trajectory $q_e$ (shot end). We compute their representations in the $\tau$-space. Then, provided an arc connecting two adjacent nodes (or points or portals between two adjacent points) i and j of the roadmap, we compute the cost of this arc along 3 criteria: how much the targets on-screen properties are enforced, how much the drone height is enforced, and how much targets are visible. Note that, to ensure all criteria are given the same weight in the evaluation, we scale each of them with regards to the distance (in the $\tau$-space) between $q_s$ 101 and $q_e$ 102. In practice, this is done by homogenizing the screen and world distances as follows.

Change in screen properties is evaluated as the distance between nodes i and j in the Safe Toric Space. In a certain extent, it can be viewed as an evaluation of changes in the screen position, size and view angle of targets. Practically, the lengths are homogenized and the squared distance is computed in the Safe Toric Space as the sum

$$D^2_{screen}(i,j) = \left(\frac{|\alpha_i - \alpha_j|}{|\alpha_e - \alpha_s|}\right)^2 + \left(\frac{|\varphi_i - \varphi_j|}{|\varphi_e - \varphi_s|}\right)^2 + \left(\frac{|\theta_i - \theta_j|}{|\theta_e - \theta_s|}\right)^2$$

Change in height is evaluated as the homogenized difference in the drone height between both nodes i and j. In a way similar to screen properties, we homogenize this change and compute the squared distance in the world space as

$$D_{height}^2(i,j) = \left(\frac{|z_i - z_j|}{|z_e - z_s|}\right)^2$$

Note that, as a whole, the length of the arc in the $\tau$-space can be viewed as an homogeneous Euclidian distance computed as

$$D_\tau(i,j) = \sqrt{D_{screen}^2(i,j) + D_{height}^2(i,j)}$$

Occlusion: in a way similar to Oskam et al. cited hereinabove, we evaluate how much targets are occluded along the arc by using the visibility information encoded in the roadmap, the roadmap corresponding to the collision-free space of the 3D scene 1. This cost O(i,j) is finally normalized so as to be comprised between 0 (fully visible) and 1 (fully occluded).

The length (or cost) L of an arc is then defined as the combination of this Euclidian distance and the occlusion cost

$$L(i,j) = [1 + \beta O(i,j)].D_\tau(i,j)$$

where $\beta$ defines the relative cost of traveling through portals where the targets 10, 11 are visible versus portals where they are occluded. Finally, the length of a path is computed as the cumulative lengths of all individual arcs along the path.

A path tracing algorithm is then used, e.g. an A* algorithm, to search the roadmap. Note that, to ensure the feasibility of the final trajectory, (i) we insert the previously known configurations of the drone in the path and (ii) we account for the initial acceleration and speed of the drone in the path planning step, and remove all nodes that would not be reachable by the drone (considering its maximum speed and acceleration), where the satisfaction of a path is the weighted sum of the squared satisfaction of each feature. This allows computing an appropriate collision-free path between two camera poses that minimizes the changes in the on-screen composition along the path as well as the path length, while it maximizes the visibility of targets along the path.

Based on this representation, for each node we can compute the corresponding configuration. The initial path is then generated through an A* algorithm. The cost to transition between two nodes is given by the squared sum of differences between each visual property. To ensure that each property has the same weight, each property distance has to be scaled with regard to the distance between the initial and final shot. The cost function also integrates the visibility of the targets extracted from the visibility information available in the roadmap. However, the heuristic function that estimates the costs to the final pose only evaluates the distance in terms of visual properties with no regards to visibility. In addition, in order to ensure the feasibility of the trajectory, we integrate the initial acceleration and speed of the drone in the path planning step to remove nodes that would not be reachable by the drone (considering its maximum speed and acceleration).

Sketch-based path planning

As illustrated in **Figure 2**, a user may (a) sketch an approximate trajectory 200, e.g. via a user interface displayed on a screen, without accounting for obstacles 21, 22, 23 and 24, (b and c) he/she may interactively adjust the height along the path and preview the resulting input trajectory, (d) he/she may finally let the apparatus 8 compute a collision-free and feasible drone trajectory 201. A drone trajectory is also computed to move the drone from its current configuration to the beginning of the sketched trajectory. The user may also manually sketch a 2.5D trajectory from a top view of the scene. He/she may then adjust the drone height at desired key-points along the trajectory (in a way similar to animation key-frames). The output of this first step is an initial approximate trajectory (which we refer to as T) modeled as a list of points which may or may not belong to the free space (represented by the roadmap). Our goal is then to plan an appropriate path through the roadmap which best fits T while it also avoids collisions with the environment.

We here make the observation that a traditional A* algorithm would not be suitable as it could not consider paths with loops, which the user might want to intentionally create. More generally, most common graph search algorithms are designed to avoid cycles.

After exploring several strategies to overcome this limitation, we propose a novel search algorithm that we designed as a modified version of an A*, and which allows to pass several times through the same node of the roadmap. The concept remains the same: it uses a list of potential nodes S, which we update by adding the neighbors of the node that have the best potential (this node is subsequently removed from the list). The potential of nodes is evaluated with a cost function and a heuristic function. The process stops as soon as the final node is found or when S becomes empty. To allow loops to be created, we rely on a different structure where an additional abstraction layer is added to account for the progression along the input trajectory. We introduce the notion of virtual/abstract node, noted v. These abstract nodes are a combination of a real node n from the roadmap and a position along the input trajectory T (i.e. in our case, an index i in the list of input points). These abstract nodes are created in a lazy way, as we explore the roadmap, before being inserted in S.

The initialization of the algorithm consists in creating the start and end node ns and the final node ne from respectively the first and last positions of the input trajectory. These two nodes are temporarily inserted in the roadmap and linked with their closest neighbors. We start the exploration of the roadmap by creating the initial virtual node $v_s(n_s,0)$ which we then add to S. Then, we iteratively extract the best virtual node $v_b(n_b,i_b)$ from S. For each of the neighbors $n_n$ of $n_b$, we compute the closest position along the input trajectory within $[i_b,i_b+\delta]$, where $\delta$ represents the search window. This step is important as it avoids to create virtual nodes for every single point along T. Furthermore, constraining the search over a given window ensures that the algorithm can detect intentional loops. In practice, using the radius of the portals to compute $\delta$ seems to be a good compromise. Once such a position in is found, we create a new virtual node $v_n(n_n,i_n)$ for this neighbor and evaluate it using the following cost function C:

$$C(v_n) = C(v_b) + \|T[i_n] - n_n\|.(i_n - i_b)$$

For the heuristic function H, we use the average distance error:

$$H(v_n) = \frac{C(v_n)}{i_n}$$

Similar to the A* algorithm, we then check whether the virtual node already exists in S. When it is not the case, the virtual node is inserted. Otherwise if the computed cost is lower than the current cost assigned to the virtual node in S, it updates the information.

To avoid dynamic obstacles, at run-time, the path is constantly checked within the roadmap to make sure that every node that are to be traversed still belongs to the free space. When at least one node does not satisfy this condition, the path planning step is restarted from the current drone configuration and position along the drawn path. This process has the advantage to remain efficient and to incorporate a live collision avoidance.

Generating a $C^4$ continuous trajectory

After computing a path through the roadmap, a third optional challenge is the computation of a feasible trajectory (i.e. which can be flown by a quadrotor drone). This third challenge is optional as it may not be applied when the 3D scene 1 is a virtual scene.

One should note that, to ensure the $C^4$-continuity of a trajectory, a piecewise polynomial representation of degree 5 is sufficient. Each of these polynomials is then of the form

$$P_i(t) = a_i + b_i.t + c_i.t^2 + d_i.t^3 + e_i.t^4 + f_i.t^5$$

where a point on such a polynomial curve is determined by the value of t comprised between 0 and 1.

We consider our input trajectory is described as a list of N key-points: the N nodes traversed by the computed path. The output trajectory will then be composed of N-1 polynomials, each satisfying the following constraints (to ensure $C^0$ to $C^4$ continuity):

$$P_i(0) = k_i, \forall i \in [0, N-1]$$

$$P_i(1) = k_{i+1}, \forall i \in [0, N-1]$$

$$P'_i(1) = P'_{i+1}(0), \forall i \in [0, N-2]$$

$$P''_i(1) = P''_{i+1}(0), \forall i \in [0, N-2]$$

$$P_i^{(3)}(1) = P_{i+1}^{(3)}(0), \forall i \in [0, N-2]$$

$$P_i^{(4)}(1) = P_{i+1}^{(4)}(0), \forall i \in [0, N-2]$$

where $k_i$ is the $i^{th}$ key-point on the path.

We here take advantage of the structure of the roadmap proposed in Oskam et al. 2009, where each node (or portal) represents a disc linking two adjacent spheres. Both previously presented path planning methods output a path as a list of traversed portals, and an associated initial key-point on the portal (its center point). Note that each portal represents the available freedom in optimizing the drone trajectory at a particular key-point. We then search an optimal $C^4$-continuous trajectory that passes through each of the N portals. The polynomial equation defines 6N - 6 unknown coefficients, from which 6N - 10 equations to solve are obtained when considering all continuity constraints.

To obtain a solvable system, we also constrain the first and second derivatives of the first and last polynomials to be null, that is:

$$P_0'(0) = 0, P_0''(0) = 0, P_{N-1}'(1) = 0 \text{ and } P_{N-1}''(1) = 0$$

Solving this system provides us with a $C^4$-continuous trajectory that passes through each of the initial key-points. However, depending on the density of nodes in the roadmap, the obstacles in the scenes and the relative configurations (positions and orientations) of the targets, the computed path is rarely satisfactory as is (i.e. is often implies many sudden changes in position, speed and acceleration).

The solution proposed by Oskam et al. 2009 consisted in smoothing the path through a simple iterative process that tends to minimize the path curvature. While offering decent results in most cases for non-cinematographic purposes, this solution remains limited and introduces artifacts in some cases (e.g. close nodes). It is also believed that, for a cinematographic trajectory, minimizing its curvature is most often not a priority while an important aspect is instead to ensure its smoothness. It is thus of higher importance to minimize the changes in its curvature to generate more homogeneous motions. Another advantage of optimizing the curvature variations instead of the curvature itself is that it reduces the use of the drone's actuators which might also result in battery savings.

The optimization problem according to the present principles may be viewed as the computation of all coefficients of the N-1 polynomials so as to minimize the absolute curvature variations. This minimization can be formalized as

$$min_{k_i} \sum_{i=0}^{N-2} \int_0^1 P_i^{(3)}(t)^2 \, dt$$

We find a solution to this optimization problem -- which is nonlinear with nonlinear constraints -- by using an Interior Point Optimization solver. The solver is then provided with the N initial key-points computed at the path planning step as an initial solution to improve.

Following the trajectory

When a $C^4$ spline curve S (defining the drone trajectory 1001 or 201) has been computed, we are left with a final challenge: the task of making the drone follow this curve as closely as possible. As the goal is to avoid obstacles, the drone cannot be allowed to deviate too much from the computed trajectory.

As an initial step, we perform an arc-length re-parametrization of the spline so that every point along it is defined by

$$S(u), u \in [0, L]$$

where L is the total curvilinear length of the path.

Given this representation of the trajectory, at each time step t, we compute the current theoretical position u(t) of the drone onto the trajectory ; practically this is done by minimizing $\|S(u(t)) - \omega\|$ such that u(t) is taken in a local neighborhood of u(t-1) and with u(t)≥u(t-1). We then compute a new goal position for the drone further along the spline curve (using the curvilinear distance to ensure this future position remains accessible by the drone). To do so, we consider the motion direction of the drone along the path which is computed as $|S'(u(t))|$, the normalized first derivative of the spline at position u(t).

From discussions with an expert drone pilot, it was decided that a live control of the velocity (norm of the speed) should be left to the user. This indeed represents an interesting feature as it allows her to finely tune the drone motions to adapt to the scene evolution (i.e. to the timing of targets' motions). More precisely, we let the user control the acceleration in order to produce smoother drone motions, i.e. with a constant velocity and avoiding jerky motions due to the remote controller. To ensure that the drone position remains feasible (i.e. it belongs to the spline), both the speed and acceleration are clamped at a maximum value. Currently, considering that we are addressing cinematographic tasks in indoor environments, these two thresholds are sufficient to guarantee that the drone can closely follow a designed trajectory (as shown in our result section). To handle higher velocities, one could also adjust the maximum speed and acceleration by analyzing the spline curvature within a given horizon window.

In addition, we also allow the user to interactively adjust the framing of targets. He/she is provided with an interface where she can, at any time, choose which target(s) should be framed or directly control the yaw and tilt angles of the drone for a finer control of the on-screen composition (which can be relative to one or more targets) in the case of a constrained (hand drawn) trajectory.

Coordinating multiple drones/cameras

In this section we detail our proposal on the coordination of multiple quadrotor drones around a number of moving targets, which builds upon on the Safe Toric Space and the path planning technique proposed hereinabove.

One aim is to coordinate the positions and motions of mutliple drones around dynamic targets by (i) covering distinct cinematographic views of the targets at the same time, and (ii) avoiding conflicts between the drones. The challenges to address here, in a system where targets move freely in the environment, are actually to (i) minimize possible conflicts between drones while ensuring a good cinematographic covering of the scene, (ii) dynamically reassigning locations to drones as conflicts arise. Three types of conflicts are considered: visibility when a drone has another drone visible in its viewport, collision when two drones are below an minimum safety distance, and angle when the angle between any pair of drones and a target (or the center of multiple targets) is too small (small angles induce undesirable jump-cuts when switching from one viewpoint to another).

To tackle these challenges, we first rely on a master/slave relation hypothesis between drones: at any time, the system has a unique master drone (the drone that is currently shooting the scene), and multiple slave drones not currently shooting but either ready to shoot the scene, or moving towards positions where these would be ready to shoot from. The purpose of the slave drones is to propose at any time alternate and complementary viewpoints on the targets while avoiding visibility conflicts with the master drone (ie each slave should not be in the view frustum of the master's camera). This hypothesis draws its inspiration from editing rooms in TV shows where a director controls which camera is the live feed (the master), knows or controls how the other camera are placed (slaves) and decides when to switch to another camera. As with editing rooms, when switching to another camera, ie switching to a slave drone ready to shoot and without conflicts, the slave drone becomes a master drone and the master becomes a slave.

Then, to ensure the computation of cinematographic views of targets, we propose to empower the drones with elements of cinematographic knowledge expressed as a collection of possible framings. A framing is a specification of viewpoint properties expressed in the cinematographic language PSL (Prose Storyboard Language) relative to one or two targets. These framings correspond to classical shot angles from film literature (eg shots like apex, over-the-shoulder, medium close-up).

As the targets evolve, the drones move to maintain the framing features using the tracking features. On onset of conflicts, a dynamic reassignment process is performed which minimizes the number and cost of changes to perform using local repair techniques. In the sequel, we present the details of this approach.

The coordination principle is then organized in a 3 stage process

    i) find an initial spatial arrangement for camera drones by using min-conflict optimization
    ii) move the slave drones towards their computed target locations
    iii) forever maintain the spatial arrangement under dynamically changing conditions when possible and rely on local repair techniques to recompute a spatial arrangement with minimal change as new conflicts arise.

With each drone, master or slave, is associated some cinematographic knowledge, expressed as a collection of 17 possible framings. A framing} f is a specification of viewpoint properties expressed in the cinematographic language PSL (Prose Storyboard Language) relative to one or two targets. These framings correspond to classical shot angles in film literature (eg over-the-shoulder shots, medium close-up shots, apex shots). While multiple languages have been proposed for the purpose of controlling a virtual camera, only the PSL specification language is strongly tied to cinematography. Designed for both annotating film shots and expressing specifications for computational cinematography, the language only finds partial implementations as narrative.

For a framing f with a list l of targets, the positions of which are known, we define a framing instance operator which computes a geometric instance of the framing f. This instance $I_{f,l}$ is computed and expressed as a volume of possible drone positions in which each position $\tau$ in the Safe Toric Space shares the cinematographic properties of f. The idea is founded on the notion of Director Volumes which represent a convex volume to which a multiple semantic tags are associated, each tag representing a visual cinematographic property such as visibility, camera angle, shot size, etc. The dynamic computation of these regions was performed using BSPs, a computationally expensive process to be performed in real-time especially when considering visibility with complex scene geometries. In contrast, we express this volume as a convex 3D region defined in the Safe Manifold Surface coordinates.

Three types of conflicts with two natures of conflicts were identified. Hard conflicts should be avoided at any time, and soft conflicts should be avoided whenever possible, and introduce some flexibility in a problem that otherwise easily becomes overconstrained.

Collision conflicts are always hard conflicts and enforce a minimal distance between two drones to avoid perturbations due to air thrusts and ground effects. Collision conflicts also occur between the drone and environment constraints (boundaries of the scene or scene geometry). Collision conflicts are handled by performing Euclidean distance computations (in case of collisons between drones), and queries in the roadmap in case of collisions with the static scene geometry.

Visibility conflicts (having a drone viewing another drone in it's viewpoint) is a hard conflict when applied to the master drone (no other drone should be visible in its viewport), but is a soft conflict between slave drones, or between a slave drone and a master drone, ie the slave may have the master in it's viewport. Visibility conflicts are detected in a straightforward way when computed between drone configurations using frustum tests. However visibility conflicts also need to be computed between two frame instances (when mutliple drones need to select frames instances eg during the initial assignment), or between a frame instance and a done position. Conflict detection is performed in two different stages: (i) when assigning framings to each drone (region to region visibility computation), and (ii) when the scene is evolving (drone to region visibility computation) to check if a region is still valid or to evaluate valid regions. Since the intersection between the framing instance region and the frustum cannot be performed algebraically, a straightforward dichotomic search is performed along the edges of the of the 3D STS-space (similar to the marching cube technique). For each edge, we approximate the possible intersection with the frustum. A region is then fully visible by another region, partially visible, or non visible at all.

Ideally, all conflicts should be avoided between all the drones at any time. However, given the wideness of the view angles we consider (diagonal angle is 92° on the parrot, and 94° on the DJI Phan tom 3), the dynamic orchestration of multiple drones around moving targets in a constrained environment while preventing all conflicts quickly becomes in practice an intractable problem. Hence, the motivation behind our master/slave hyothesis --and beyond the idea of reproducing an TV show editing room-- is also to avoid locked situations where too many simultaneous conflicts limit the possibilities and reduce the practical applicability of the approach and as a side effect, to reduce the overall computational complexity due to pair-wise conflict testing between drones.

The overall approach consists in selecting consistent framings for the master and all the slave drones, so as to avoid visibility conflicts with the master, collision conflicts between all the drones, and minimize angle and visibility conflicts between the slaves. %For the sake of clarity, we'll present the initial assignment process using an initial configuration where there are three drones (1 to 3) at known positions, including one Master drone (MD), two Slave drones (SD1 and SD2) and two characters (C1 and C2), the positions of which are known in advance. The assignment process first consists in selecting an arrangement of consistent framings (ie configuration of drones that are not in conflict).

This is a straightforward combinatorial assignement problem, easily expressed as a CSP (Constraint Satisfaction Problem). However, we aim at more than just a consistent assignement. First, when there are multiple consistent assignments possible (ie multiple solutions where there are no conflicts), it is preferable to select the one that requires the least energy for the global system (ie selecting among possible solutions the one for which the total length between current drone positions and target regions are the shortest). Second, when there is no consistent assignment, it is preferable to select an assignement that minimizes the conflicts. To this end, we rely on a min-conflict local search technique, which from a first initial assignment, iteratively selects the drone which has the most conflicts and for this drone selects a candidate framing which minimizes all conflicts. Interestingly the minconflict strategy can provide a locally best solution at any time.

The process can be formalized as follows. Let's define a drone d to which can be associated one camera specification f among a set of possible specifications F. We provide a function c(d) which computes the number of conflicts the drone d has with other drones, and a second function $f(d_i, s_j)$ which computes the cost for a drone $d_i$ to move to a region corresponding to a specification $s_j$. This cost is is the length of the path in the roadmap from a the drone's position to the center of it's destination region. Computing max ic($d_i$) selects the drone with most conflicts, and the largest cost. The selection of the best framing candidate then relies on searching for the framing j that minimizes min jc(d)+f($d_i$,$s_j$).

Once an initial assignment is performed, we decide a destination position in each region, computed as the center of the region in STS coordinates, and then converted into a drone configuration. When regions are partially visible (ie intersect a frustum), the center of the largest visible volume is computed in STS space. We then rely on the drone path planning technique to compute a path to the destination position. To this end, the roadmap is dynamically updated by tagging nodes inside the frustum of the master drone as non-traversable, so that slave drones trajectories do not cross the frustum.

When coordinating multiple drones, the roadmap is dynamically updated by tagging nodes inside the master drone's frustum as non-traversable. If a drone is inside the view frustum of the master drone, a path is computed which avoids non traversable nodes.

At any time, as the scene evolves (ie the master drone moves or targets move), the systems maintains the camera framings when possible. When targets move, the framing instances are updated and the drones move towards the center of their updated framing instance. As conflicts appear (eg a framing instance is in conflict), a new combination of framings needs to be assigned to one or multiple drones. To this end, we rely on local repair techniques, a well-known heuristic in dynamic planning problems which minimize the amount of changes in assignments. The process is the following: a list L containing the drones in conflict at time \$t\$ is created. The minconflict is then applied to the drones in L and gives a subset list L' of the drones still in conflict. All the drones in conflict with each drone of L' are then added to the list L over which minconflict is re-applied. The process ends when no conflicts are found, or when the minconflict has been applied to all the slave drones in the scene. In the best case, only the salve drones in conflict will be re-assigned a new framing. In the worst case, all slave drones will be reassigned a framing.

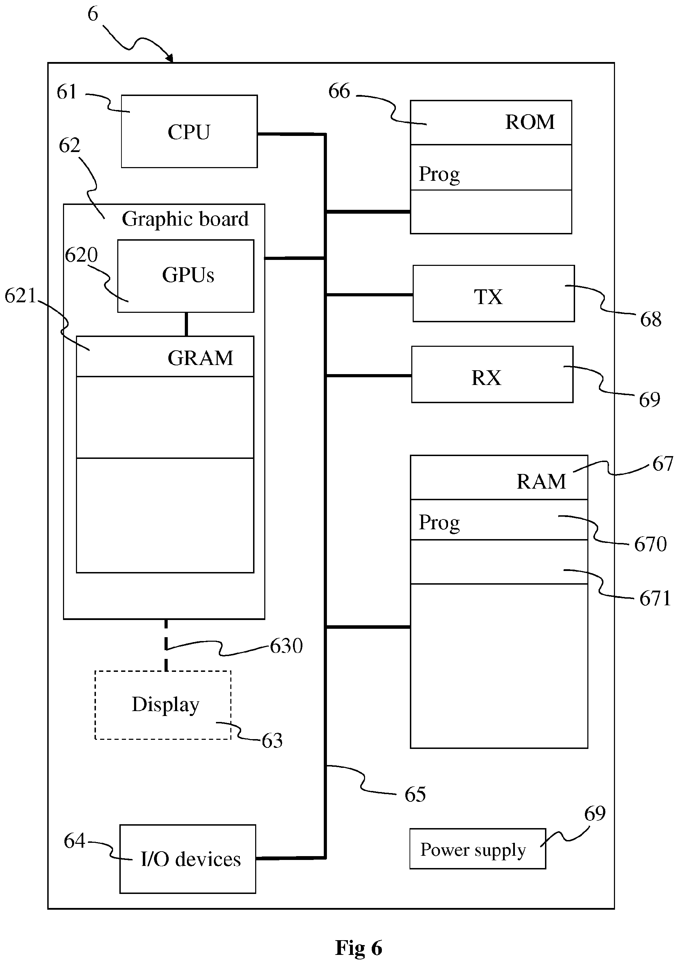

**Figure 6** diagrammatically shows a hardware embodiment of an apparatus 6 configured for determining the trajectory of a camera within a 3D scene. The apparatus 6 corresponds for example to a tablet, a Smartphone, a games console, a computer, a laptop or a Set-top box.

The apparatus 6 comprises the following elements, connected to each other by a bus 65 of addresses and data that also transports a clock signal:

- a microprocessor 61 (or CPU),
- a graphics card 62 comprising:

    • several Graphical Processor Units (or GPUs) 620,
    • a Graphical Random Access Memory (GRAM) 621,

- a non-volatile memory of ROM (Read Only Memory) type 66,
- a Random Access Memory or RAM 67,
- a transmitter 68 configured to transmit data representative of the trajectory,
- a receiver 69 configured to receive data from the camera;
- one or several I/O (Input/Output) devices 64 such as for example a tactile interface, a mouse, a webcam, etc. and
- a power source 69.

The apparatus 6 may also comprise one or more display devices 63 of display screen type directly connected to the graphics card 62 to display images calculated in the graphics card, for example live. The use of a dedicated bus to connect the display device 63 to the graphics card 62 offers the advantage of having much greater data transmission bitrates and thus reducing the latency time for the displaying of images composed by the graphics card. According to a variant, a display device is external to the apparatus 6 and is connected to the apparatus 6 by a cable or wirelessly for transmitting the display signals. The apparatus 6, for example the graphics card 62, comprises an interface for transmission or connection (not shown in figure 6) adapted to transmit a display signal to an external display means such as for example the first display device (e.g. an HMD), a LCD or plasma screen or a video-projector.

It is noted that the word "register" used in the description of memories 621, 66, and 67 designates in each of the memories mentioned, both a memory zone of low capacity (some binary data) as well as a memory zone of large capacity (enabling a whole program to be stored or all or part of the data representative of data calculated or to be displayed).

When switched-on, the microprocessor 61 loads and executes the instructions of the program contained in the RAM 67.

The random access memory 67 notably comprises:

- in a register 670, the operating program of the microprocessor 61 responsible for switching on the apparatus 6,
- data 671 representative of the 3D scene,

The algorithms implementing the steps of the method(s) specific to the present disclosure (e.g. the method of transmitting a first image and/or the method of compositing the first image) are stored in the memory GRAM 621 of the graphics card 62 associated with the apparatus 6 implementing these steps. When switched on and once the data 671 are loaded into the RAM 67, the graphic processors 620 of the graphics card 62 load these parameters into the GRAM 621 and execute the instructions of these algorithms in the form of microprograms of "shader" type using HLSL (High Level Shader Language) language or GLSL (OpenGL Shading Language) for example.

The random access memory GRAM 621 notably comprises:

- in a register, data representative of the images;
- in a register, data representative of first, second and third information.

According to another variant, a part of the RAM 67 is assigned by the CPU 61 for storage of the identifiers and the distances if the memory storage space available in GRAM 621 is insufficient. This variant however causes greater latency time in the composition of an image comprising a representation of the environment composed from microprograms contained in the GPUs as the data must be transmitted from the graphics card to the random access memory 67 passing by the bus 65 for which the transmission capacities are generally inferior to those available in the graphics card for transmission of data from the GPUs to the GRAM and vice-versa.

According to another variant, the power supply 68 is external to the apparatus 6.

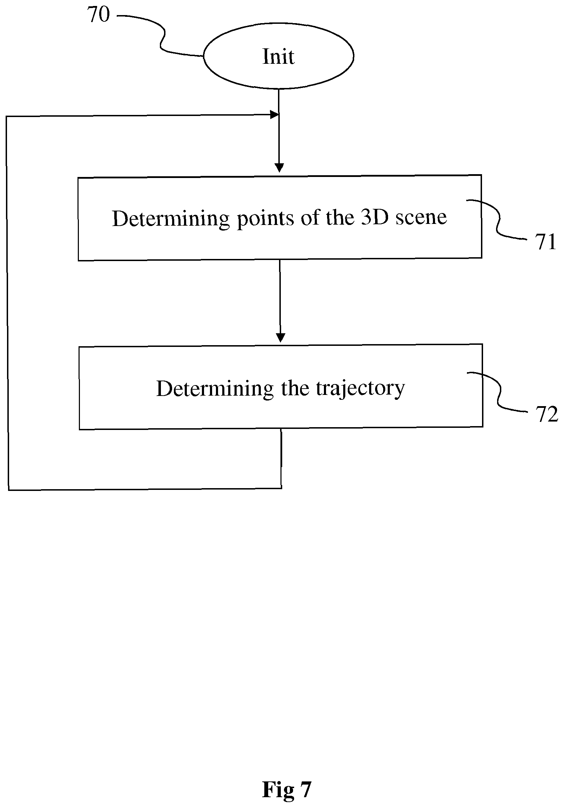

In an alternate embodiment, the apparatus 6 does not include any ROM but only RAM, the algorithms implementing the steps of the method specific to the present disclosure and described with regard to figure 7 being stored in the RAM. According to another variant, the apparatus 6 comprises a SSD (Solid-State Drive) memory instead of the ROM and/or the RAM.

**Figure 7** shows a method of determining a trajectory of a camera in a 3D scene 1, according to a non-limiting embodiment of the present principles. The method is for example implemented in the apparatus 6.

In an operation 70, the different parameters of the apparatus 6 are updated. In particular, the parameters representative of the 3D scene are initialised in any way.

In an operation 71, a set of points of said 3D scene is determined, the set of points representing of a collision-free space of the 3D scene, also called roadmap.

In an operation 72, the trajectory in the 3D scene is determined, the trajectory having a starting point and an ending point, the trajectory being defined with a plurality of points selected within the set, the plurality of points being selected according to a difference of the pose information defined in an image space between pairs of selected points from the starting point to the ending point, the image space being associated with an image of at least a part of the scene acquired with the first camera.

Naturally, the present disclosure is not limited to the embodiments previously described.

In particular, the present disclosure is not limited to a method and device for determining a trajectory but also extends to a method of controlling the camera/drone within the 3D scene and to any device implementing these methods and notably any devices comprising at least one CPU and/or at least one GPU.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of determining a trajectory of a first camera in a three-dimensional scene, said 3D scene comprising at least one object of interest, a pose information being associated with said at least one object of interest, the method comprising:

   - determining a set of points of said 3D scene, said set of points representing of a collision-free space of said 3D scene;
   - determining said trajectory in said 3D scene, said trajectory having a starting point and an ending point, said trajectory being defined with a plurality of points selected within said set, said plurality of points being selected according to a difference of said pose information defined in an image space between pairs of selected points from said starting point to said ending point, said image space being associated with an image of at least a part of said scene acquired with said first camera.

2. The method according to claim 1, wherein said trajectory is determined by applying a cost function minimizing said difference to an A* algorithm.

3. The method according to one of claims 1 to 2, wherein said plurality of points is further selected according to a visibility criteria associated with said points of said set, said visibility criteria being representative of a visibility level of said at least one object of interest from said points.

4. The method according to one of claims 1 to 3, wherein said trajectory is further determined to minimize changes of curvature when passing from a point to another point in said selected plurality of points.

5. The method according to one of claims 1 to 4, further comprising removing points from said set of points that belong to a field of view of a second camera located in said 3D scene.

6. The method according to one of claims 1 to 5, further comprising generating an approximate trajectory, said trajectory being further determined according to said approximate trajectory.

7. A device configured to determine a trajectory of a first camera in a three-dimensional scene, said 3D scene comprising at least one object of interest, a pose information being associated with said at least one object of interest, the device comprising a memory associated with a processor configured to:

   - determine a set of points of said 3D scene, said set of points representing of a collision-free space of said 3D scene;
- determine said trajectory in said 3D scene, said trajectory having a starting point and an ending point, said trajectory being defined with a plurality of points selected within said set, said plurality of points being selected according to a difference of said pose information defined in an image space between pairs of selected points from said starting point to said ending point, said image space being associated with an image of at least a part of said scene acquired with said first camera.

**8.** The device according to claim 7, wherein said trajectory is determined by applying a cost function minimizing said difference to an A* algorithm.

**9.** The device according to one of claims 7 to 8, wherein said plurality of points is further selected according to a visibility criteria associated with said points of said set, said visibility criteria being representative of a visibility level of said at least one object of interest from said points.

**10.** The device according to one of claims 7 to 9, wherein said processor is further configured to minimize changes of curvature when passing from a point to another point in said selected plurality of points to determine said trajectory.

**11.** The device according to one of claims 7 to 10, wherein said processor is further configured to remove points from said set of points that belong to a field of view of a second camera located in said 3D scene.

**12.** The device according to one of claims 7 to 11, wherein said processor is further configured to generate an approximate trajectory, said trajectory being further determined according to said approximate trajectory.

**13.** A non-transitory processor readable medium having stored therein instructions for causing a processor to perform at least the steps of the method according to one of claims 1 to 6.

**14.** A computer program product comprising instructions of program code for executing the method according to any one of claims 1 to 6, when said program is executed on a computer.

**Fig 1**

**Fig 2**

**Fig 3**

**Fig 4**

**Fig 5**

6

61 **CPU**

62 **Graphic board**

620 **GPUs**

621 **GRAM**

66 **ROM**
Prog

68 **TX**

69 **RX**

67 **RAM**
Prog
670
671

630

Display

63

65

64 **I/O devices**

69 **Power supply**

**Fig 6**

70

Init

Determining points of the 3D scene — 71

Determining the trajectory — 72

**Fig 7**

Europäisches
Patentamt

European
Patent Office

Office européen
des brevets

# EUROPEAN SEARCH REPORT

Application Number

EP 17 30 5051

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/044297 A1 (EMPIRE TECHNOLOGY DEV LLC [US]; KRUGLICK EZEKIEL [US]) 5 April 2012 (2012-04-05) | 1-14 | INV. G05D1/00 G05D1/10 |
| Y | * paragraphs [0014], [0021], [0032], [0033]; figures 1,3,10,7 * | 7-14 | |
| X | US 2016/017866 A1 (CRAFT DAVID GLENN [US] ET AL) 21 January 2016 (2016-01-21) * paragraphs [0015], [0018]; figures 2-5 * | 1-14 | |
| X | THOMAS OSKAM ET AL: "Visibility transition planning for dynamic camera control", PROCEEDINGS OF THE 2009 ACM SIGGRAPH/EUROGRAPHICS SYMPOSIUM ON COMPUTER ANIMATION, SCA '09, 1 August 2009 (2009-08-01), pages 55-65, XP055198106, New York, New York, USA DOI: 10.1145/1599470.1599478 ISBN: 978-1-60-558610-6 | 1-6 | |
| | | | **TECHNICAL FIELDS SEARCHED (IPC)** |
| Y | * figures 3,4 * | 7-14 | G05D |

The present search report has been drawn up for all claims

| Place of search | Date of completion of the search | Examiner |
|---|---|---|
| Munich | 29 June 2017 | Camerer, Stephan |

EPO FORM 1503 03.82 (P04C01)

## ANNEX TO THE EUROPEAN SEARCH REPORT
## ON EUROPEAN PATENT APPLICATION NO.

EP 17 30 5051

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2017

| Patent document cited in search report | Publication date | Patent family member(s) | Publication date |
|---|---|---|---|
| WO 2012044297 A1 | 05-04-2012 | EP 2558817 A1<br>US 2013317667 A1<br>US 2015112516 A1<br>WO 2012044297 A1 | 20-02-2013<br>28-11-2013<br>23-04-2015<br>05-04-2012 |
| US 2016017866 A1 | 21-01-2016 | NONE | |

For more details about this annex : see Official Journal of the European Patent Office, No. 12/82

**EP 3 349 086 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LINO C. ; CHRISTIE M.** Intuitive and Efficient Camera Control with the Toric Space. *ACM Transactions on Graphics,* 2015

- **OSKAM et al.** Visibility transition planning for dynamic camera control. *Proceedings of 2009 ACM SIGGRAPH,* 2009